(19) Europäisches Patentamt
European Patent Office
Office européen des brevets

(11) **EP 2 081 982 B1**

(12) **EUROPÄISCHE PATENTSCHRIFT**

(45) Veröffentlichungstag und Bekanntmachung des Hinweises auf die Patenterteilung:
**07.05.2014 Patentblatt 2014/19**

(21) Anmeldenummer: **07818351.4**

(22) Anmeldetag: **22.09.2007**

(51) Int Cl.:
*C08J 5/00* (2006.01)     *C08J 5/18* (2006.01)
*C08L 67/04* (2006.01)

(86) Internationale Anmeldenummer:
**PCT/EP2007/008263**

(87) Internationale Veröffentlichungsnummer:
**WO 2008/040467 (10.04.2008 Gazette 2008/15)**

(54) **SIMULTAN VERSTRECKTE FOLIE AUS PLA MIT VERBESSERTEN MECHANISCHEN EIGENSCHAFTEN**

SIMULTANEOUSLY ORIENTED PLA FILM WITH IMPROVED MECHANICAL PROPERTIES

FILM DE PLA À ÉTIRAGE SIMULTANÉ ET PROPRIÉTÉS MÉCANIQUES AMÉLIORÉES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **05.10.2006 DE 102006047059**

(43) Veröffentlichungstag der Anmeldung:
**29.07.2009 Patentblatt 2009/31**

(73) Patentinhaber: **Treofan Germany GmbH & Co.KG**
**66539 Neunkirchen (DE)**

(72) Erfinder:
• **BUSCH, Detlef**
  **66740 Saarlouis (DE)**
• **SCHMITZ, Bertram**
  **57200 Sarreguemines (FR)**

(74) Vertreter: **Kremer, Viola et al**
**Treofan Germany GmbH & Co. KG**
**Am Prime Parc 17**
**65479 Raunheim (DE)**

(56) Entgegenhaltungen:
**EP-A- 0 980 894      EP-A- 1 245 616**
**JP-A- 2003 136 592   US-A1- 2004 010 063**

**Beschreibung**

Die vorliegende Erfindung betrifft eine biaxial orientierte Polyhydroxycarbonsäure-Folie, die mindestens eine Schicht umfasst, welche ein Polymeres auf Basis von Hydroxycarbonsäuren enthält. Die Erfindung betrifft ferner ein Verfahren zur Herstellung der PHC-Folie sowie ihre Verwendung.

Folien aus thermoplastischen Kunststoffen werden in einem immer größeren Umfang zur Verpackung von Lebensmitteln und anderen Packgütern eingesetzt. Die Entsorgung dieser Materialien stellt inzwischen ein in gleicher Weise wachsendes Problem dar. Recyclingsysteme entwickeln sich nur mühsam, haben eine fragliche Effektivität und sind oft nur regional, z. B. in Deutschland umgesetzt. Erdöl als das natürliche Ausgangsmaterial der thermoplastischen polyolefinischen Kunststoffe ist begrenzt. Diese Umstände haben zu der Entwicklung von Verpackungsmaterialien aus nachwachsenden und kompostierbaren Rohstoffen geführt. Beispiele hierfür sind Polymere und Copolymere von Milchsäuren und anderen aliphatischen Hydroxycarbonsäuren.

Neben den Rohstoffen sind im Stand der Technik auch Folienprodukte aus diesen Rohstoffen bekannt. Auf Grund der hohen Rohstoffkosten sind diese Produkte oftmals gegenüber den herkömmlichen Polymerfolien nicht wettbewerbsfähig. Aus Kostengründen sind daher dünne Folien aus nachwachsenden und kompostierbaren Rohstoffen besonders wünschenswert. Dabei dürfen selbstverständlich die wichtigen Gebrauchseigenschaften, wie z.B. gleichbleibende Maschinengängigkeit, Steifigkeit Barriereeigenschaften, Dickenprofil, Verarbeitbarkeit etc. nicht beeinträchtigt werden.

Grundsätzlich haben dünnere Folien jedoch immer eine überproportional schlechtere Steifigkeit in Maschinenrichtung und damit ein wesentlich schlechteres Maschinenlaufverhalten auf den heutigen schnellaufenden Einschlagsmaschinen. Die Steifigkeit (S) einer Folie ist proportional dem Elastizitätsmodul (E) und der dritten Potenz der Dicke (d) $[S = E.d<3>]$. Daher hat man bei dünneren Folien nur die Möglichkeit, den Verlust an Steifigkeit über den Elastizitätsmodul der Folie zu kompensieren. Die Erhöhung des Elastizitätsmoduls (E-Modul) in Maschinenrichtung ist daher seit langem Gegenstand intensiver Bemühungen.

Es ist von boPP-Folien bekannt, daß der E-Modul in Maschinenrichtung entweder über die Verfahrenstechnik oder über Rohstoffmodifikationen oder die Kombination beider Möglichkeiten erhöht werden kann, beispielsweise über ein drei- oder mehrstufiges Streckverfahren. Ein solches Herstellverfahren hat jedoch den Nachteil, dass es eine zusätzliche Vorrichtung zur Nachlängsstreckung benötigt und dadurch sehr aufwendig ist. Darüber hinaus ist es häufiger zu Störungen im Produktionsablauf, z. B. Folienabrisse. Ferner weisen solche nachlängsgestreckten boPP-Folien einen gegenüber lediglich biaxial verstreckten Folien deutlich erhöhten Längsschrumpf auf, der es in der Regel verhindert, dass die Folien eine thermische Trocknung, wie sie z. B. nach dem Aufbringen von Klebermassen zum Teil noch üblich ist, ohne unerwünschte Schrumpffalten überstehen.

In ähnlicher Weise gilt es für die universelle Einsetzbarkeit der Folie die Reißfestigkeit in Längsrichtung zu verbessern, da die Reißfestigkeit gleichermaßen die Brauchbarkeit der Folie in den verschiedenen Anwendungen wesentlich bestimmt. Ähnlich wie beim E-Modul haben sequentiell verstreckte Folien jedoch gerade in Längsrichtung eine, niedrige Reißfestigkeit.

US 5,443,780 beschreibt beispielsweise die Herstellung von orientierten Folien aus PLA. Das Verfahren geht aus von einer PLA-Schmelze, welche extrudiert und schnell abgekühlt wird. Anschließend kann diese Vorfolie einem uniaxialen Streckprozeß unterworfen oder sequentiell oder simultan biaxial verstreckt werden. Die Strecktemperatur liegt zwischen der Glastemperatur und der Kristallisationstemperatur des PLA. Durch die Verstreckung wird eine gesteigerte Festigkeit und ein höherer Young'scher Modul bei der Endfolie. Es ist nicht angegeben, welche Foliendicken nach diesem Verfahren hergestellt werden können. Es ist nicht angegeben, welche Art von Simultanstreckverfahren angewendet werden kann. In jedem Fall zeigen die Figuren, daß die Erhöhung der mechanischen Festigkeiten in Längsrichtung zu Lasten der entsprechenden Festigkeit in Querrichtung geht. Wenn gleich die verbesserte Festigkeit in MD-Richtung durchaus wünschenswert ist, wird die Folie in diesem Fall durch viel zu niedrige Werte in Querrichtung völlig unbrauchbar. Die maximal möglichen Streckfaktoren nach dieser Lehre sind 3,5 bei einer monoaxialen Verstreckung bzw. 2,5 *2,5 bei einer Verstreckung in beide Richtungen

EP 1 153 743 beschreibt einen biologisch abbaubaren Beutel aus einem Laminat. Das Laminat wird durch Wärmeversiegelung zweier Folien hergestellt, wobei eine der beiden Folien aus einem aliphatischen Polyester aufgebaut ist, beispielsweise aus PLA. Es ist beschrieben, daß diese PLA Folien durch biaxiale Verstreckung hergestellt werden können, wobei alle grundsätzlich möglichen Verfahren zur Verstreckung einer Folie angegeben sind. Es ist nicht beschrieben, welche Foliendicken mittels Simultanstreckverfahren hergestellt werden können. Nach der Beschreibung sind Streckfaktoren zwischen 1,5 bis 6 für die Orientierung in Längs- oder Querrichtung möglich. Gemäß dem Beispiel wird bei der sequentiellen biaxialen Verstreckung 3*3 gestreckt.

Im allgemeinen ist es bei der Herstellung einer biaxial verstreckten Folie aus thermoplastischen Polymeren wünschenswert die maximal möglichen Streckfaktoren anzuwenden. Zum Einen ist die Ausbeute an orientierter Folie um so höher je höher die Streckfaktoren sind, zum Anderen wird die Folienqualität verbessert. Die durch Verstreckung.erzielte mechanische Festigkeit ist um so besser je höher die Streckfaktoren sind. Thermoplastische Polymeren lassen sich jedoch nicht beliebig oder unbegrenzt verstrecken. Es gibt im allgemeinen eine natürliche Streckgrenze die jedem Material innewohnt und nicht ohne weiteres beeinflußt werden kann. Beim Überschreiten dieser Streckgrenze kommt es zu einer Überdehnung die Abrisse und Weißbruch zur Folge hat. Gegebenenfalls hat man bei der biaxialen Verstreckung die Möglichkeit den Streckfaktor in eine Richtung zu reduzieren, um auf Kosten dieser Maßnahme die Verstreckung in die andere Richtung zu erhöhen.

Für PLA-Folien hat sich gezeigt, daß bei einer sequentiellen Verstreckung Streckfaktoren von etwa 2,5 bis maximal 3 in MD-Richtung nicht überschritten werden können. Andernfalls kommt es zu den vorstehend beschriebenen Problem, insbesondere zu Weißbruch durch Überdehnung. Nach der Längsstreckung sollte zur Erreichung eines akzeptablen Dickenprofils mindestens 4,5 in Querrichtung verstreckt werden. Eine Erhöhung des Streckfaktor in Querrichtung auf bis zu 5,5- 6 ist möglich und wurde bei einer sequentiellen Verstreckung realisiert. Somit sind die bisher maximal möglichen Flächenstreckverhältnisse (Längsstreckfaktor*Querstreckfaktor) für PLA-Folien maximal 18.

EP 0 748 273 beschreibt ein Verfahren zur Herstellung von Dünnstfolien aus PET. Nach dieser Lehre können mittels Simultanverstreckung aus PET-Rohstoffen Folien mit einer Dicke von unter 2,5 $\mu$m hergestellt werden. Erfindungsgemäß kann durch das Simultanstreckverfahren ein überraschend gutes Dickenprofil eingestellt werden, welches für derartig dünne Folien besonders kritisch ist. Außer PET sind keine weiteren Polymeren angegeben, welche nach dem Verfahren zu biaxial verstreckten Folien verarbeitet werden können.

US 2004/010063 A1 betrifft ein aliphatisches Polyesterharz, welche zusätzlich eine Komponente enthält, die als Weichmacher wirkt. Dieser Weichmacher beeinträchtigt die Kompostierbarkeit der Zusammensetzung nicht negativ und zeigt keine nachteiligen Auswirkungen durch Migration. Das Polyesterharz dieser Druckschrift kann zur Herstellung verschiedener Gebrauchsgüter verwendet werden, darunter auch Folien.

EP-A-1 245 616 offenbart eine biaxial verstreckte Folie aus PLA mit einem Speicherelastizitätsmodul von 100 bis 230 MPa. Die Folie soll sich durch einen geringen Schrumpf und eine geringe Neigung zur Faltenbildung auszeichnen. Die Reißfestigkeit der Folie kann in einem Bereich von 98 bis 196 N/mm$^2$ liegen. Die Folie kann sequentiell oder simultan verstreckt werden. Dabei betragen die Streckfaktoren 1,5 bis 6 in beide Richtungen, wobei vorzugsweise mit einem Faktor von mindestens 2 in beide Richtungen verstreckt werden soll. In den Beispielen und Vergleichsbeispielen werden alle Folien sequentiell verstreckt, wobei in Längsrichtung maximal mit 3,0 und in Querrichtung maximal mit 3,5 verstreckt wird. Die Reißfestigkeiten dieser Beispiele betragen in Längsrichtung maximal 129 N/mm$^2$ und 130 N/mm$^2$ in Querrichtung. Eine Dicke der Folie wird in der gesamten Beschreibung nicht erwähnt. Alle Folien der Beispiele und Vergleichsbeispiele sind 40 $\mu$m dick.

EP-A-0 980 894 beschreibt eine Blasfolie aus PLA mit Weichmacher. Die Verstreckung der Blase beträgt maximal 3,0. Die Folie wird als Landwirtschaftsfolie oder als Müllbeutel verwendet.

JP 2003 136592 beschäftigt sich mit biaxial verstreckten Folien, die in Querrichtung wesentlich höher verstreckt sind als in Längsrichtung. Konkret wird eine Folie in Längsrichtung mit 2,5 und in Querrichtung mit Faktor 6 verstreckt. Die mechanische Festigkeit in Längsrichtung ist entsprechend niedrig, d.h. die Reißfestigkeit in Längsrichtung liegt unter 1400 N/mm$^2$ und der E-Modul unter 3200 N/mm$^2$.

Die Aufgabe der vorliegenden Erfindung bestand darin, umweltfreundliche Folien und Verpackungen zur Verfügung zu stellen, welche zum einen aus nachwachsenden Rohstoffen hergestellt und zum anderen umweltfreundlich entsorgt werden können. Die Folien sollen wirtschaftliche Vorteile und optimierte Gebrauchseigenschaften für die Verwendung als Verpackungsfolie, insbesondere gute mechanische Eigenschaften aufweisen.

Die Aufgabe wird gelöst durch ein biaxial orientierte Folie aus mindestens einer Schicht, die ein Polymeres I aus mindestens einer Hydroxycarbonsäure enthält, wobei die Folie eine Dicke <25$\mu$m aufweist und simultan verstreckt ist und

eine Reißfestigkeit in MD-Richtung von 140 bis 250N/mm$^2$ und in TD Richtung von 140 bis 250N/mm$^2$ oder

einen E-Modul in MD-Richtung von 3200 bis 6000N/mm$^2$ und in TD Richtung von 3200 bis 6000N/mm$^2$ aufweist,

wobei sich die Reißfestigkeits-Werte oder die E-Modul-Werte in MD-Richtung und TD Richtung um maximal 40%, bezogen auf den Wert in TD-Richtung, unterscheiden.

Die Aufgabe wird weiterhin gelöst durch ein Verfahren zur Herstellung einer PHC-Folie, bei welchem man eine Schmelze aus PHC und gegebenenfalls weiteren Zusatzstoffen extrudiert, und die Schmelze zu einer Flachfolie abkühlt, und anschließend die abgekühlte Flachfolie simultan in Längs- und Querrichtung verstreckt, wobei der Streckfaktor in Längsrichtung mindesten 4 beträgt.

Die Aufgabe wird auch gelöst, durch ein Verfahren zur Herstellung einer PHC-Folie bei welchem man eine Schmelze aus PHC und gegebenenfalls weiteren Zusatzstoffen extrudiert, und die Schmelze zu einer Flachfolie abkühlt, und anschließend die abgekühlte Flachfolie simultan in Längs- und Querrichtung verstreckt, wobei das Flächenstreckverhältnis mindestens 21 beträgt.

Bevorzugt beträgt die Reißfestigkeit der erfindungsgemäßen PHC-Folie in MD-Richtung 150 bis 200N/mm$^2$ und in TD Richtung 150 bis 200N/mm$^2$. Bevorzugt beträgt der E-Modul der erfindungsgemäßen PHC-Folie in MD-Richtung 3500 bis 5000N/mm$^2$ und in TD Richtung 3500 bis 5000N/mm$^2$.

Es wurde gefunden, dass durch Simultanstreckung dünne PHC-Folien mit einer Dicke von unter 25$\mu$m herge-

stellt werden können. Überraschenderweise weisen diese dünne Folien sehr gute mechanischen Eigenschaften in beide Richtungen auf. Insbesondere zeigt die Folie eine unerwartet hohe Reißfestigkeit in Längsrichtung, wobei die entsprechende Festigkeit in Querrichtung gegenüber sequentiell verstreckten Folien weitgehend erhalten bleibt, zumindest nicht wesentlich niedriger liegt. Es wurde ursprünglich erwartet, daß im Vergleich zu einer sequentiell verstreckten Folie die Erhöhung der Reißfestigkeit, bzw. die Erhöhung des E-Moduls in MD-Richtung zwangsläufig mit einer wesentlichen Beeinträchtigung der entsprechenden Werte in TD einhergehen würde. Dies ist überraschenderweise nicht, bzw. so wenig ausgeprägt der Fall, daß die nach dem erfindungsgemäßen Verfahren hergestellten Folie trotz der sehr geringen Dicke von unter $25\mu m$ in den üblichen Verarbeitungs- und Anwendungsprozessen problemlos eingesetzt werden kann. Die Folie hält den bei diesen Prozessen auftreten mechanischen Belastung stand, die mechanischen Festigkeiten sind überraschend in beiden Richtungen so gut, so daß die Folie störungsfrei und laufsicher verarbeitet werden kann.

Die erfindungsgemäße Folie ist einschichtig oder mehrschichtig aufgebaut. Einschichtige Ausführungsformen sind wie die nachstehend beschriebene PHC-Schicht aufgebaut. Mehrschichtige Ausführungsformen sind mindestens zweischichtig und umfassen mehrere PHC-Schichten, die sich in Aufbau und Zusammensetzung unterscheiden, wobei die PHC-Schicht vorzugsweise die Basisschicht der mehrschichtigen Ausführungsform ist. Gegebenenfalls kann auch die Zwischen- oder die Deckschicht der mehrschichtigen Folie eine PHC-Schicht sein. In einer bevorzugten Ausführungsform bildet die PHC-Schicht die Basisschicht der Folie mit mindestens einer, vorzugsweise mit beidseitigen PHC-Deckschicht/en, wobei gegebenenfalls einseitig eine oder beidseitig Zwischenschicht/en vorhanden sein kann/können.

Die Basisschicht ist im Sinne der vorliegenden Erfindung diejenige Schicht, welche mehr als 30 % bis 100 %, vorzugsweise 50 bis 90 %, der Gesamtfoliendicke ausmacht und die größte Schichtdicke aufweist. Die Deckschichten sind die Schichten, welche die äußeren Schichten der Folie bilden. Zwischenschichten sind naturgemäß zwischen der Basisschicht und den Deckschichten angebracht.

Die PHC- Schicht, welche gegebenenfalls die einzige Schicht der erfindungsgemäßen Folie ist, enthält ein Polymeres I aus mindestens einer Hydroxycarbonsäure, sowie gegebenenfalls weitere zugesetzte Additive in jeweils wirksamen Mengen. Im allgemeinen enthält diese Schicht mindestens 70 bis 100 Gew.-%, vorzugsweise 80 bis <100 Gew.-%, insbesondere 80 bis 98 Gew. -%, eines Polymeren 1 aus mindestens einer Hydroxycarbonsäure, bezogen auf das Gewicht der Schicht. Polymere 1 aus mindestens einer Hydroxycarbonsäure sind Homopolymere oder Mischpolymerisate, Welche aus polymerisierten Einheiten von, vorzugsweise aliphatischen, Hydroxycarbonsäuren aufgebaut sind. Unter den für die vorliegende Erfindung geeigneten PHC sind insbesondere Polymilchsäuren geeignete. Diese werden nachstehend als PLA (Polylactidacid) bezeichnet. Auch hier sind unter dem Begriff sowohl Homopolymere, welche nur aus Milchsäureeinheiten aufgebaut sind, als auch Mischpolymerisate zu verstehen, welche überwiegend Milchsäureeinheiten (>50%) in Verbindungen mit anderen aliphatischen Hydroxycarbonsäureeinheiten enthalten.

Als Monomere der aliphatischen Polyhydroxycarbonsäuren (PHC) sind insbesondere aliphatische Mono-, Di- oder Trihydroxycarbonsäuren, bzw. deren dimere cyclische Ester geeignet, worunter Milchsäure in ihrer D-oder L-Form bevorzugt ist. Ein geeignetes PLA ist beispielsweise Polymilchsäure der Fa. Cargill Dow (NatureWorks®). Die Herstellung von Polymilchsäure ist im Stand der Technik bekannt und erfolgt über katalytische Ringöffnungspolymerisation von Lactid (1,4-Dioxan-3,6-dimethyl2,5-dion), dem dimeren cyclischen Ester der Milchsäure, daher wird PLA häufig auch als Polylactid bezeichnet. In den folgenden Veröffentlichungen ist die Herstellung von PLA beschrieben US 5,208,297, US 5,247,058 oder US 5,357,035.

Bevorzugt sind Polymilchsäuren, welche ausschließlich aus Milchsäureeinheiten aufgebaut sind. Hierbei sind insbesondere PLA Homopolymere bevorzugt, welche 80 - 100 Gew.-% L-Milchsäureeinheiten, entsprechend 0 bis 20 Gew.-% D-Milchsäureeinheiten, enthalten. Zur Verringerung der Kristallinität können auch noch höhere Konzentrationen D-Milchsäureeinheiten als Comonomer enthalten sein. Gegebenenfalls kann die Polymilchsäure zusätzlich von der Milchsäure verschiedene aliphatische Hydroxycarbonsäureeinheiten als Comonomer aufweisen, beispielsweise Glycolsäureeinheiten, 3-Hydroxypropansäureeinhaiten, 2,2-Dimethyl-3-hydroxypropansäureeinheiten oder höhere Homologe der Hydroxycarbonsäuren mit bis zu 5 Kohlenstoffatomen.

Bevorzugt sind Milchsäurepolymere (PLA) mit einem Schmelzpunkt von 110 bis 170°C, vorzugsweise von 125 bis 165°C, und einen Schmelzflußindex (Messung DIN 53 735 bei 2,16 N Belastung und 190°C) von 1 bis 50g/10 min, vorzugsweise von 1 bis 30 g/10 min. Das Molekulargewicht des PLA liegt in einem Bereich von mindestens 10.000 bis 500.000 (Zahlenmittel), vorzugsweise 50.000 bis 300.000 (Zahlenmittel). Die Glasübergangstemperatur Tg liegt in einem Bereich von 40 bis 100°C, vorzugsweise 40 bis 80°C.

In einer weiteren Ausführungsform kann die Folie in mindestens einer PHC-Schicht zusätzlich Cyclolefincopolymere (COC) in einer Menge von mindestens 0,5 Gew.-%, bevorzugt 1 bis 30 Gew.-% und besonders bevorzugt 5 bis 20 Gew.-%, bezogen auf das Gewicht der PHC-Schicht bzw. bezogen auf das Gewicht der Folie bei einschichtigen Ausführungsformen, enthalten. Derartige Ausführungsformen sind opak und haben eine reduzierte Dichte.

Unter einer reduzierten Dichte der opaken PHC-Folien wird im Sinne der vorliegenden Erfindung eine Folie verstanden, deren Dichte unterhalb der Dichte liegt, welche sich rechnerisch aus der Zusammensetzung und aus der Dichte der Ausgangsstoffe ergibt. Eine reduzierte Dichte für PLA Folien ist eine Dichte von < 1,25 g/cm$^3$.

Unter einer opaken, biaxial orientierten PHC-Folie wird im Sinne der vorliegenden Erfindung eine Folie bezeichnet, die einen Weißgrad von mindestens 10 %, bevorzugt von mehr als 20 % und eine Opazität von mehr als 20 %, bevorzugt mehr als 25 % aufweist. Im allgemeinen beträgt die Lichtdurchlässigkeit nach ASTM-D 1003-77 solcher opaken Folien weniger 95 %, vorzugsweise weniger als 75 %.

Im allgemeinen hat das COC, welches der PHC-Schicht zugesetzt wird eine Tg von 70 bis 270°C. In einer bevorzugten Ausführungsform der erfindungsgemäßen Folie liegt die Glasübergangstemperatur der verwendeten COC's in einem Bereich von 90 bis 200°C und in der besonders bevorzugten Ausführungsform in einem Bereich von 110 bis 160°C.

Cycloolefinpolymere sind Homopolymerisate oder Copolymerisate, welche aus polymerisierte Cycloolefineinheiten und gegebenenfalls acyclische Olefine als Comonomer aufgebaut sind. Für die vorliegende Erfindung sind Cycloolefinpolymere, geeignet, die 0,1 bis 100 Gew.-%, bevorzugt 10 bis 99 Gew.-%, besonders bevorzugt 50-95 Gew.-%, jeweils bezogen auf die Gesamtmasse des Cycloolefinpolymeren, polymerisierte Cycloolefineinheiten enthalten. Besonders geeignete Cycloolefinpolymere sind im Einzelnen und detailliert in der EP 1 068 949 beschrieben auf welche hiermit ausdrücklich Bezug genommen wird.

Unter den vorstehend beschriebenen und in der EP 1 068 949 beschrieben Cycloolefincopolymeren sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind auch Cycloolefincopolymere (COC), die polymerisierte Einheiten acyclischer Olefine, insbesondere Ethylen, enthalten. Wiederum besonders bevorzugt sind Norbonen/Ethylen- und Tetracyclododecen/Ethylen-Copolymere, welche 5 bis 80 Gew.-%, vorzugsweise 10 bis 60 Gew.-% Ethylen enthalten (bezogen auf das Gewicht des Copolymeren).

Die vorstehend und in der EP 1 068 949 generisch beschriebenen Cycloolefinpolymeren weisen im allgemeinen Glasübergangstemperaturen zwischen 100 °C und 400° C auf. Für die Erfindung sind Cycloolefincopolymerisate (COC) verwendbar, die eine Glasübergangstemperatur von grösser als 70°C, vorzugsweise grösser als 90°C und insbesondere grösser als 110°C aufweisen. Die Viskositätszahl (Dekalin, 135 DEG C, DIN 53 728) liegt zweckmässiger weise zwischen 0,1 und 200 ml/g, bevorzugt zwischen 50 und 150 ml/g.

Die Cycloolefncopolymere werden entweder als reines Granulat oder als granuliertes Konzentrat (Masterbatch) in die Folie eingearbeitet, indem das Granulat aus PHC, vorzugsweise PLA, mit dem Cycloolefincopolymer (COC) bzw. dem Cycloolefincopolymer (COC)-Masterbatch vorgemischt und anschliessend dem Extruder zugeführt wird. Im Extruder werden die Komponenten weiter vermischt und auf Verarbeitungstemperatur erwärmt. Dabei ist es für das erfindungsgemässe Verfahren zweckmässig, dass die Extrusionstemperatur oberhalb der Glasübergangstemperatur Tg des Cycloolefincopolymeren (COC) liegt, im allgemeinen mindestens 10°C, vorzugsweise 15 bis 100°C, insbesondere 20 bis 150°C, über der Glasübergangstemperatur des Cycloolefincopolymeren (COC).

Die Schichten der erfindungsgemäßen PHC-Folie können zusätzlich übliche Additive, wie Neutralisationsmittel, Stabilisatoren, Antiblockmittel, Gleitmittel und andere Füllstoffe, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Russ, Titandioxid, Kaolin oder vernetzte Polymerpartikel, z.B. Polystyrol-, Acrylat-, PMMA-Partikel oder vernetzte Silikone. Besonders geeignet ist auch Muskovit-Glimmer mit einer mittleren Partikelgröße (gewichtetes Mittel) von 4,0 -12$\mu$m, vorzugweise 6 bis 10 $\mu$m. Glimmer (engl. Mica) sind bekanntlich plättchenförmige Silikate, deren Formfaktor (aspect ratio) vorzugsweise im Bereich von 5 bis 50 liegt. Die Antiblockmittel-Konzentration beträgt im allgemeinen 0,01 bis maximal 1 Gew.-%, bezogen auf das Gewicht der Deckschicht, wobei transparente Ausführungsformen im Hinblick auf eine niedrige Trübung nicht mehr als 0,5 Gew.-% enthalten sollten. Als Additive können auch Mischungen von zwei und mehreren verschiedenen Antiblockmitteln oder Mischungen von Antiblockmitteln gleicher Zusammensetzung, aber unterschiedlicher Partikelgrösse gewählt werden. Die Partikel können den Polymeren der einzelnen Schichten der Folie in den jeweils vorteilhaften Konzentrationen direkt oder über Masterbatche bei der Extrusion zugegeben werden. Bevorzugt werden Antiblockmittel der oder den Deckschicht/en zugesetzt.

Als Antistatika sind Glycerinfettsäureester besonders geeignet, bei denen eine, zwei oder alle drei Alkoholfunktionen mit einer Fettsäure verestert sind. Bevorzugt sind Monoester, bei welchen nur eine Alkoholgruppe des Glycerins mit einer Fettsäure verestert ist, sogenannte Glycerinmonofettsäureester. Geeignete Fettsäuren dieser Verbindungen haben eine Kettenlänge von 12 bis 20 C-Atomen. Bevorzugt sind Stearinsäure, Laurinsäure oder Ölsäure. Als besonders vorteilhaft hat sich Glycerinmonostearat (GMS) erwiesen. Glycerinfettsäureester wird vorzugsweise in der Deckschicht und insbesondere in einer Menge von 1 bis 10 Gew.-% insbesondere 2 -6 Gew.-% eingesetzt. In einer bezüglich Antistatik besonders vorteilhaften Ausführungsform wird GMS mit einem der vorstehend beschriebenen Antiblockpartikel kombiniert.

In einer weiteren möglichen Ausführungsform werden zur Verbesserung der Antistatik und des Antiblockverhaltens der Deckschicht stärkebasierten Partikel in einer Menge von 0,01 -10 Gew.-%, insbesondere 0,01 bis 5 Gew.-

%, bezogen auf das Gewicht der Deckschicht, zugefügt. Geeignet sind modifiziert und unmodifizierte Stärkearten, die beispielsweise auf Kartoffelstärke, Maisstärke oder Weizenstärke basieren. Die ursprüngliche Teilchengröße der Partikel ist vergleichsweise unkritisch, da die Stärkepartikel bei der Folienextrusion zerkleinert werden. Die Stärkepartikel weisen in der Folie im allgemeinen eine absolute Teilchengröße von 1 bis 15 $\mu$m auf und können eine beliebige, regelmäßige oder unregelmäßige Teilchenform aufweisen.

Für weiße Ausführungsformen der PHC-Folie kann die PHC-Schicht oder mindestens eine der weiteren Schichten, gegebenenfalls auch die opake PHC-Schicht, zusätzlich ein Pigment enthalten. Pigmente sind beispielsweise Bariumsulfat, vorzugsweise mit einer mittlere Teilchengröße von 0,3-0,8$\mu$m, vorzugsweise 0,4-0,7 $\mu$m oder Titandioxid, vorzugsweise mit einer mittleren Teilchengröße von 0,05-1 $\mu$m. Die Folie erhält hierdurch ein brillantes, weißes Aussehen. Im allgemeinen enthält die pigmentierte Schicht in diesen Ausführungsformen 1 bis 25 Gew.-%, vorzugsweise über 1 bis 20 Gew.-%, und insbesondere 1 bis 15 Gew.-% Pigmente jeweils bezogen auf das Gewicht der Schicht.

Erfindungsgemäß beträgt die Gesamtdicke der Folie <25$\mu$m, vorzugsweise 5 - 20$\mu$m, insbesondere 8 bis 18$\mu$m. Die Dicke der gegebenenfalls vorhandenen Zwischenschicht/en beträgt im allgemeinen jeweils unabhängig voneinander 0,5 bis 3. Die Dicke der Deckschicht/en wird unabhängig von den anderen Schichten gewählt und liegt bevorzugt im Bereich von 0,1 bis 4 $\mu$m, insbesondere 0,2 bis 3 $\mu$m, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Die verschiedenen vorstehend beschriebenen Ausführungsformen der erfindungsgemäßen Folie können als Substrat für eine anschließende Metallisierung verwendet werden. Hierbei haben sich insbesondere solche Ausführungsformen als besonders vorteilhaft erwiesen, welche auf der Oberfläche einer COC-haltigen Schicht metallisiert werden, d.h. einschichtige Ausführungsformen und solche mit einer entsprechenden COC-haltigen Schicht als Deckschicht. Es wurde gefunden daß Schichten aus COC und Polymer aus mindestens einer Hydroxycarbonsäure eine besonders gute Metallhaftung aufweisen.

Des weiteren kann die beschriebene Folie als Etikettenfolie eingesetzt werden, sowie als Verpackungsfolie zur Verpackung von Lebensmitteln und Gebrauchsgütern. Auf Grund vorteilhafter Dreheinschlagseigenschaften, die an sich von PLA Folie bekannt sind eignet sich die Folie auch sehr gut für Dreheinschlagsverpackungen für Bonbons, Tampons und ähnliches.

Die Erfindung betrifft weiterhin ein Verfahren zur Herstellung der PHC-Folie, vorzugsweise PLA-Folie. Bei der nachstehenden Beschreibung des erfindungsgemäßen Verfahrens beziehen sich alle Ausführungen sowohl auf die Herstellung einer PHC-Folie im allgemeinen, sowie auf ein Verfahren zur Herstellung der bevorzugten PLA-Folien. In diesem Sinne umfaßt der Begriff Folie sowohl PHC-Folien als auch PLA-Folien. Erfindungsgemäß wird die Folie mittels Simultanstreckverfahren hergestellt. Simultanstreckverfahren umfassen im Sinne der vorliegenden Erfindung Verfahren bei denen die Folienschmelze zunächst durch eine Flachdüse extrudiert wird/werden und anschließend durch geeignete Vorrichtungen gleichzeitig in Längs- und Querrichtung verstreckt werden. Derartige Verfahren und Vorrichtungen zur Ausführung des Verfahrens sind im Stand der Technik beispielsweise als LISIM oder als MESIM (Mechanische Simultan Verstreckung) Verfahren bekannt. LISIM Verfahren sind im Einzelnen in der EP 1 112 167 und EP 0 785 858 beschrieben, auf welche hiermit ausdrücklich Bezug genommen wird. Ein MESIM Verfahren wird in der US 2006/0115548 beschrieben, auf welche gleichfalls ausdrücklich Bezug genommen wird. In einer weiteren, aber nicht bevorzugten Ausführungsform kann die Folie auch als Blasfolie hergestellt werden, da auch bei diesen Verfahren eine gleichzeitige Verstreckung in Längs- und Querrichtung erfolgt.

Im Rahmen des erfindungsgemäßen Simultanstreckverfahrens wird so vorgegangen, dass die der einschichtigen Folie oder die den Schichten der Folie entsprechende/n Schmelze/n durch eine Flachdüse extrudiert/koextrudiert wird/werden, die extrudierte Schmelze zur Verfestigung auf einer oder mehreren Walze/n bei einer Temperatur von 10 bis 100°C, vorzugsweise 30 bis 80°C, abgekühlt und abgezogen wird. Anschließend diese Vorfolie oder Flachfolie biaxial gestreckt (orientiert), die biaxial gestreckte Folie thermofixiert und gegebenenfalls an der zur Behandlung vorgesehenen Oberflächenschicht plasma-, corona- oder flammbehandelt wird.

Die biaxiale Verstreckung wird erfindungsgemäß simultan durchgeführt. Dabei wird die Folie gleichzeitig in Längsrichtung (d.h. in Maschinenrichtung=MD-Richtung) und in Querrichtung (d.h. senkrecht zur Maschinenrichtung=TD-Richtung) verstreckt. Dies führt zu einer Orientierung der Molekülketten.

Nach dem LISIM© Verfahren erfolgt die Siumltanverstreckung nach einem kontinuierlichen Simultanreckverfahren. Die Folie wird hierbei in einem Reckofen mit einem Transportsystem befördert, welches nach dem LISIM© -Verfahren arbeitete. Dabei werden die Folienränder von sog. Kluppen erfasst, welche mittels eines Linearrmotors angetrieben werden. Einzelne Kluppen, beispielsweise jede Dritte, sind mit Permanentmagneten bestückt und dienen gleichzeitig als Sekundärteil eines Linearmotorantriebes. Über nahezu den ganzen umlaufenden Transportweg sind parallel zur Führungsschiene die Primärteile des Linearrmotorantriebes angeordnet. Die nicht-angetriebenen Kluppen dienen lediglich dazu, Folienkräfte quer zur Laufrichtung aufzunehmen und den Durchhang zwischen den Haltepunkten zu reduzieren.

Nachdem die Folienränder von den Kluppen erfasst sind durchläuft die Vorfolie eine Vorheizzone in der die Führungsschienen der Kluppen im wesentlichen parallel verlaufen. In diesem Bereich des Reckofens wird der Vor-Folie durch eine geeignete Heizvorrichtung, beispielsweise eine Konvektionsheizung oder IR-Strahler, von der Einlauftemperatur auf die Recktemperatur erwärmt. Danach beginnt der Simultanreckprozess, indem die voneinander unabhängigen Kluppenwagen in Folienrichtung beschleunigt werden und somit separieren, d.h. ihren Abstand zueinander vergrößern. Auf diese Weise wird die Folie in die Länge gestreckt. Gleichzeitig wird diesem Prozess eine Querstreckung überlagert und zwar dadurch, dass die Führungsschienen im Bereich der Kluppenbeschleunigung divergieren.

Danach wird die Folie im Hinblick auf die gewünschten mechanischen Folieneigenschaften fixiert. Hierbei erfolgt eine Heat-Set-Behandlung bei erhöhter Temperatur, bei der die Folie gegebenenfalls in Längs- oder Querrichtung kontrolliert im eingespannten Zustand geringfügig relaxiert. Besonders vorteilhaft kann das simultane Relaxieren in Längs- und Querrichtung sein. Hier werden die Kluppenwagen verzögert, wodurch sich deren Abstand zueinander reduziert. Gleichzeitig läßt man die Führungsschienen des Transportsystems leicht konvergieren.

Nach dem MESIM® Verfahren erfolgt die Simultanverstreckung nach einem dem LISIM Verfahren äquivalenten Prinzip. Die Folie wird hierbei ebenfalls in einem Reckofen mit einem Transportsystem aus Kluppen auf Führungsschienen befördert. Hierbei gibt es an jedem Folienrand ein Schienenpaar auf dem gegenüberliegende Kluppen und kluppenähnliche Elemente angeordnet und über ein Scherengelenk miteinander verbunden sind. Durch das Scherengelenk kann der Abstand der Kluppen zueinander variiert werden. In dem das Scherengelenk auseinander gezogen wird vergrößert sich der Abstand der Kluppen zueinander. Umgekehrt wird beim Zusammenfahren des Gelenkes der Abstand verringert. Im Reckofen sind die beiden Führungsschienen des jeweiligen Schienenpaares (mit Scherengelenk) konvergierend angeordnet, wodurch das Scherengelenk auseinandergezogen wird und die Kluppen in Laufrichtung der Folie beschleunigen und ihre Abstände zueinander vergrößern. Hierdurch wird die Folie in die Länge gestreckt. Gleichzeitig erfolgt durch die divergierende Anordnung der Schienenpaare an jedem Folienrand eine gleichzeitige Querstreckung.

Bei einer Verstreckung nach dem vorstehend beschriebenen LISIM oder MESIM-Verfahren wird die Folie in der Vorheizzone im allgemeinen auf eine Strecktemperatur zwischen dem Glaspunkt und dem Schmelzpunkt der Polyhydroxycarbonsäure aufgeheizt. Für PLA-Folien ist ein Temperaturbereich von 60 - 150°C bevorzugt, insbesondere 70 - 110°C, insbesondere 80 - 100°C, bei welcher die simultane Verstreckung schließlich erfolgt. Die Streckverhältnisse können flexibel gewählt werden, so daß die Folie unterschiedlichen Anforderung je nach Einsatzgebiet entsprechen kann. Überraschenderweise läßt sich der Längsstreckfaktor bei einer Simultanverstreckung auf bis zu 6, insbesondere auf bis zu 5,5 erhöhen und liegt damit deutlich über den technisch realisierbaren Längsstreckfaktoren bei einer sequentiellen Verstreckung. Vorzugsweise beträgt der Streckfaktor in Längsrichtung 3 bis 6, insbesondere 4 bis 5,5. Trotz dieser überraschend hohen Längsverstreckung ist es gleichzeitig möglich die an sich bekannten Streckfaktoren in Querrichtung von bis zu 7, insbesondere von 5 bis 6 beizubehalten. Vorzugsweise beträgt der Streckfaktor in Querrichtung 4 bis 7, insbesondere 5 bis 6. Somit sind Flächenstreckverhältnisse von bis 42 zu realisieren. Derartige Flächenstreckverhältnisse, sind bei einer sequentiellen Verstreckung nicht ansatzweise erreichbar.

Es ist somit sowohl überraschend, daß eine wesentlich höhere Längsverstreckung von PHC, bzw. PLA mittels Simultanverstreckung möglich ist, als auch ganz besonders überraschend, daß eine hohe Längsverstreckung mit vergleichsweise hohen Querstreckfaktoren kombiniert werden kann. Die Simultanverstreckung ermöglicht somit Flächenstreckverhältnisse, welche bisher für biaxial verstreckte PLA-Folien nicht erreicht wurden und die vorzugsweise im Bereich von 20 bis 40, insbesondere im Bereich von 25 bis 35 liegen.

An die Streckung der Folie schließt sich die beschriebene Thermofixierung (Wärmebehandlung) an, bei der die Folie etwa 0,1 bis 10 s lang bei einer Temperatur von 60 bis 150°C gehalten wird. Anschließend wird die Folie in üblicher Weise mit einer Aufwickeleinrichtung aufgewickelt.

Gegebenenfalls kann zur Einstellung weiterer Eigenschaften die Folie beschichtet werden. Typische Beschichtungen sind haftvermittelnde, antistatisch, schlupfverbessernd oder dehäsiv wirkende Schichten. Gegebenenfalls können diese zusätzlichen Schichten über in-line coating mittels wässriger Dispersionen vor der Querverstreckung oder off-line aufgetragen werden.

Die erfindungsgemässe Folie zeichnet sich durch hervorragende mechanische Eigenschaften in Längs- und Querrichtung und eine ausgezeichnete Laufsicherheit während des Herstellungsprozesses sowie durch einen hohen E-Modul und gute Reißfestigkeit in MD- und TD-Richtung aus. Sie eignet sich hervorragend zur Verpackung von Nahrungs- und Genussmitteln. Daneben ist sie auch für den Einsatz im industriellen Bereich, z.B. bei der Herstellung von Prägefolien oder als Etikettenfolie, geeignet. Ausführungsformen, die durch den Zusatz von COC vakuolenartige Hohlräume aufweisen, haben eine reduzierte Dichte, die im Bereich von 0,6 bis 1 g/cm$^3$ liegt.

Erfindungsgemäß sind die mechanischen Festigkeiten der Folie in Querrichtung nicht wesentlich höher als in Längsrichtung, wie dies bei den sequentiell verstreckten Folien der Fall ist. Im allgemeinen wird der Unterschied der Reißfestigkeit, bzw. des E-Moduls und/oder des Schrumpfs in Längs- und Querrichtung ±40%, vorzugsweise >0 bis ±30%, insbesondere ±2 bis ±25% betragen, jeweils bezogen auf den entsprechenden Wert in Querrichtung, wohingegen der entsprechende Unterschied bei sequentiell verstreckten Folien im allgemeinen mindestens -45% beträgt, d.h. Reißfestigkeit bzw. E-Modul oder der Schrumpf ist bei diesen sequentiell verstreckten Folien in Längsrichtung mindestens 45% kleiner als in Querrichtung.

Zur Charakterisierung der Rohstoffe und der Folien wurden die folgenden Messwerte benutzt:

Schrumpf:

Die Längs- und Querschrumpfwerte beziehen sich auf die jeweilige Längenausdehnung der Folie (längs L0 und quer Q0) vor dem, Schrumpfprozeß. Die Längsrichtung ist die Maschinenrichtung, als Querrichtung wird entsprechend die Richtung quer zum Maschinenlauf definiert. Das Folienmuster von 10cm*10cm wird im Umluftofen bei 100°C über eine Dauer von 5 min geschrumpft. Anschließend werden die verbliebenen Längenausdehnungen des Musters längs und quer erneut bestimmt (L1 und Q1). Als Schrumpf in % wird dann die Differenz der ermittelten Längen im Verhältnis zur ursprünglichen Länge L0 und Q0 mal 100 angegeben.

$$\text{Längsschrumpf } L_S\ [\%] = (L_0 - L_1)/L_0 * 100 [\%]$$

$$\text{Querschrumpf } Q_S\ [\%] = (Q_0 - Q_1)/Q_0 * 100 [\%]$$

Diese Bestimmungsmethode für den Längs- und Querschrumpf entspricht DIN 40634.

Reissfestigkeit, Reißdehnung

Die Reissfestigkeit [$N/mm^2$] und die prozentuale Reissdehnung wurden nach DIN 53 455 (Zugverfahren) mit der Zugprüfgerät der Firma Zwick (Zwick1435) bestimmt.

E-Modul

Der E-Modul wird gemäss DIN 53 457 (Zugverfahren) 14 Tagen nach der Produktion bestimmt. Es wurde ebenso das Zugprüfgerät der Fa. Zwick benutzt.

Glasübergangstemperatur

Die Glasübergangstemperatur Tg wurde anhand von Folienproben mit Hilfe der DSC (Differential Scanning Calorimetry) bestimmt (DIN 73 765).

Verwendet wurde ein DSC 1090 der Fa. DuPont. Die Aufheizgeschwindigkeit betrug 20 K/min und die Einwaage ca. 12 mg. Im ersten Aufheizvorgang wurde der Glasübergang Tg ermittelt. Die Proben zeigten vielfach eine Enthalpierelaxation (ein Peak) zu Beginn des stufenförmigen Glasübergangs. Als Tg wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet.

Die Erfindung wird nachstehend an Hand von Ausführungsbeispielen erläutert

Beispiel 1:

Es wurde durch Extrusion und anschließende simultane Verstreckung auf einer LISIM-Anlage eine dreischichtige PLA-Folie mit einer Dicke von 18 μm hergestellt. Die Basisschicht war zu ca. 100 Gew.-% aus einem teilkristallinen Polymilchsäurerohstoff (4042D der Fa. Natureworks® mit einem Schmelzpunkt von 145°C und einem Schmelzflußindex von ca. 3 g/10min bei 210°C und einer Glastemperatur von 60 °C) aufgebaut. Als Deckschichtrohstoff wurde ebenso der Polymilchsäurerohstoff 4042 D der Fa. Natureworks® zu 100% eingesetzt. Die Dicke der einzelnen Deckschichten betrug 3 μm. Die Schichten enthielten zusätzlich Stabilisatoren und Neutralisationsmittel in üblichen Mengen. Die Herstellbedingungen in den einzelnen Verfahrensschritten waren:

| Extrusion: | Temperaturen | 170 - 200°C |
| | Temperatur der Abzugswalze: | 30°C |
| Strecktemperatur im LISIM-Rahmen: | | 92 °C |
| | Längsstreckverhältnis: | 4,5 |
| | Querstreckverhältnis (effektiv): | 5,5 |
| Fixierung: | Temperatur: | 135 °C |

Beispiel 2:

Es wurde eine Folie mit der gleichen Zusammensetzung wie in Beispiel 1 beschrieben hergestellt. Analog wie in Beispiel 1 beschrieben wurde durch Extrusion und anschließende simultane Verstreckung auf einer LISIM-Anlage eine dreischichtige PLA-Folie mit einer Dicke von nur 14 μm hergestellt:

| Extrusion: | Temperaturen | 170 - 200°C |
| | Temperatur der Abzugswalze: | 30°C |
| Strecktemperatur im LISIM-Rahmen: | | 88 °C |
| | Längsstreckverhältnis: | 4,5 |
| | Querstreckverhältnis (effektiv): | 5,5 |
| Fixierung: | Temperatur: | 135 °C |

Vergleichsbeispiel 1:

Es wurde durch Extrusion und anschließende stufenweise Orientierung erst in Längs- und dann in Querrichtung eine dreischichtige PLA-Folie mit einer Dicke von 30 μm hergestellt. Die Basisschicht war zu ca. 100 Gew.-% aus einem teilkristallinen Polymilchsäurerohstoff (4042D der Fa. Natureworks®) mit einem Schmelzpunkt von 145°C und einem Schmelzflußindex von ca. 3 g/10min bei 210°C aufgebaut. Als Deckschichtrohstoff wurde der Polymilchsäurerohstoff (4060D der Fa. Natureworks®) eingesetzt. Die Dicke der einzelnen Deckschichten betrug 3 μm. Die Schichten enthielten zusätzlich Stabilisatoren und Neutralisationsmittel in üblichen Mengen. Die Herstellbedingungen in den einzelnen Verfahrensschritten waren: Das angegebene Längsstreckverhältnis entspricht dem maximal ohne Abriße oder Weißbruch erreichbarem Längsstreckverhältnis.

| Extrusion: | Temperaturen | 170 - 200°C |
| | Temperatur der Abzugswalze: | 30°C |
| Längsstreckung: | Temperatur: | 68 °C |
| | max. Längsstreckverhältnis: | 2,5 |
| Querstreckung: | Temperatur: | 78 °C |
| | Querstreckverhältnis (effektiv): | 5,5 |
| Fixierung: | Temperatur: | 135 °C |

Die Eigenschaften der Folien nach den Beispielen und dem Vergleichsbeispiel sind in der nachfolgenden Tabelle zusammengefaßt:

Tabelle 1

| | Bsp. 1 | Bsp 2 | VB1 |
|---|---|---|---|
| Dicke μm | 18 | 14 | 30 |
| E-Modul MD N/mm² | 3650 | 4460 | 2800 |
| E-Modul TD N/mm² | 4200 | 4250 | 4200 |
| Differenz MD/TD in % | -15% | +5% | -33% |
| Reißfestigkeit MD N/mm² | 153 | 165 | 90 |
| Reißfestigkeit TD N/mm² | 196 | 172 | 200 |

(fortgesetzt)

| | Bsp. 1 | Bsp 2 | VB1 |
|---|---|---|---|
| Differenz MD/TD in % | 21% | 4% | 55% |
| Reißdehnung MD % | 105 | 110 | 190 |
| Reißdehnung TD % | 76 | 71 | 80 |
| Schrumpf MD / % | 4 | 4 | 3 |
| Schrumpf TD / % | 4 | 4 | 5 |

**Patentansprüche**

1. Biaxial orientierte Folie aus mindestens einer Schicht, die ein Polymeres I aus mindestens einer Hydroxycarbonsäure enthält, **dadurch gekennzeichnet, daß** die Folie eine Dicke <25$\mu$m aufweist und simultan verstreckt ist und eine Reißfestigkeit in MD-Richtung von 140 bis 250N/mm$^2$ und in TD-Richtung von 140 bis 250N/mm$^2$ oder einen E-Modul in MD-Richtung von 3200 bis 6000N/mm$^2$ und in TD Richtung von 3200 bis 6000N/mm$^2$ aufweist, wobei sich die Reißfestigkeits-Werte oder die E-Modul-Werte in MD-Richtung und TD-Richtung um maximal 40%, bezogen auf den Wert in TD-Richtung, unterscheiden.

2. Folie nach Anspruch 1 **dadurch gekennzeichnet, dass** das Polymere I aus aliphatischen Hydroxycarbonsäureeinheiten, vorzugsweise aus Milchsäureeinheiten, einen Schmelzpunkt von 110 - 170°C und einen Schmelzflußindex von 1 - 50 g/10min. hat.

3. Folie nach einem der Ansprüche 1 bis 2, **dadurch gekennzeichnet, dass** die PHC-Schicht die Basisschicht der Folie bildet und zusätzlich auf dieser Basisschicht ein oder beidseitig Deckschichten aufgebracht ist/sind, welche aus mindestens einem Polymeren I aus mindestens einer Hydroxycarbonsäure, aufgebaut ist.

4. Folie nach einem oder mehreren der Ansprüche 1 bis 3, **dadurch gekennzeichnet, dass** die Folie einen Dichte von weniger als 1,25 g/cm3, vorzugsweise 0,6 bis 1 g/cm3, aufweist.

5. Folie nach einem oder mehreren der Ansprüche 1 bis 4, **dadurch gekennzeichnet, dass** die Folie auf mindestens einer Oberfläche metallisiert ist.

6. Verwendung einer Folie nach einem der Ansprüche 1 bis 5 als Verpackungsfolie, als Dreheinschlagsfolie oder als Etikettenfolie

7. Verfahren zur Herstellung einer PHC-Folie nach einem der Ansprüche 1-6, vorzugsweise PLA-Folie, **dadurch gekennzeichnet, daß** man eine Schmelze aus PHC, vorzugsweise PLA und gegebenenfalls weiteren Zusatzstoffen extrudiert und die Schmelze zu einer Vorfolie abkühlt, und anschließend die abgekühlte Vorfolie simultan in Längs- und Querrichtung verstreckt, **dadurch gekennzeichnet, daß** der Streckfaktor in Längsrichtung mindesten 4 beträgt

8. Verfahren nach Anspruch 7, **dadurch gekennzeichnet, daß** der Streckfaktor in Querrichtung mindestens 3 bis 7 beträgt.

9. Verfahren nach Anspruch 8, **dadurch gekennzeichnet, daß** die Folie mit einem Streckfaktor von 4 bis 6 in Längsrichtung und mit einem Streckfaktor von 4 bis 6 in Querrichtung erfolgt.

10. Verfahren nach Anspruch 7, **dadurch gekennzeichnet, daß** das Flächenstreckverhältnis mindestens 21 beträgt.

11. Verfahren nach Anspruch 10, **dadurch gekennzeichnet, daß** die Folie mit einem Streckfaktor von 3 bis 6 in Längsrichtung und mit einem Streckfaktor von 3,5 bis 7 in Querrichtung verstreckt wird.

12. Verfahren nach einem der Ansprüche 7 bis 11, **dadurch gekennzeichnet, daß** die Schmelze aus einer Flachdüse extrudiert wird und die Simultan-Verstreckung über Kluppen erfolgt, die auf divergierenden Führungsschienen verfahrbar sind und während der Verstreckung in Laufrichtung der Folie derart beschleunigt werden, daß sich der Abstand der Kluppen zueinander vergrößert, wodurch gleichzeitig mit der Längsverstreckung die Verstreckung der Folie in Querrichtung erfolgt.

**13.** Verfahren nach Anspruch 12, **dadurch gekennzeichnet, daß** die Beschleunigung der Kuppen mittels gesteuerter Linearmotoren erfolgt.

**14.** Verfahren nach Anspruch 13, **dadurch gekennzeichnet, daß** die Kluppen mittels eines Scherengelenks untereinander verbunden sind und deren Abstand durch Auseinanderrücken des Scherengelenks erfolgt.

**Claims**

**1.** A biaxially oriented film composed of at least one layer comprising a polymer I made of at least one hydroxycarboxylic acid, **characterized in that** the film has a thickness of <25 $\mu$m and is simultaneously oriented and
exhibits a tear strength in the machine direction from 140 to 150 N/mm$^2$ and in the transverse direction from 140 to 250 N/mm$^2$, or
has a modulus of elasticity in the machine direction from 3200 to 6000 N/mm$^2$ and in the transverse direction from 3200 to 6000 N/mm$^2$,
the tear strength values or the modulus of elasticity values in the machine direction and transverse direction differing by a maximum of 40 % based on the value in the transverse direction.

**2.** A film according to claim 1, **characterized in that** the polymer I made of aliphatic hydroxycarboxylic acid units, preferably made of lactic acid units, has a melting point of 110-170 °C and a melt flow index of 1-50 g/10 min.

**3.** A film according to any one of claims 1 to 2, **characterized in that** the PHC layer forms the base layer of the film and a cover layer is applied in addition to one or both sides of the base layer, said cover layer(s) being composed of at least one polymer I made of at least one hydroxycarboxylic acid.

**4.** A film according to one or more of claims 1 to 3, **characterized in that** the film has a density of less than 1.25 g/cm$^3$, preferably 0.6 to 1 g/cm$^3$.

**5.** A film according to one or more of claims 1 to 4, **characterized in that** the film is metallized on at least one surface.

**6.** The use of a film according to any one of claims 1 to 5 as packaging film, as twist wrap film, or as label film.

**7.** A method for producing a PHC film according to one of claims 1 - 6, preferably a PLA film, **characterized in that** a melt of PHC, preferably PLA, and optionally further additives is extruded, the melt is cooled to a pre-film, and the cooled pre-film is subsequently simultaneously oriented in the longitudinal and transverse direction, **characterized in that** the stretch factor in the longitudinal direction is at least 4.

**8.** A method according to claim 7, **characterized in that** the stretch factor in the transverse direction is at least 3 to 7.

**9.** A method according to claim 8, **characterized in that** the film is stretched with a stretch factor from 4 to 6 in the longitudinal direction and with a stretch factor from 4 to 6 in the transverse direction.

**10.** A method according to claim 7, **characterized in that** the area stretch ratio is at least 21.

**11.** A method according to claim 10, **characterized in that** the film is oriented with a stretch factor from 3 to 6 in the longitudinal direction and with a stretch factor from 3.5 to 7 in the transverse direction.

**12.** A method according to any one of claims 7 to 11, **characterized in that** the melt is extruded through a flat film extrusion die, and the simultaneous orientation is performed by means of clips that can travel on diverging guide rails and, during orientation, are accelerated in the running direction of the film in such a way that the distance of the clips with respect to one another increases, whereby the film is oriented in the transverse direction simultaneously with the longitudinal orientation.

**13.** A method according to claim 12, **characterized in that** the clips are accelerated by means of controlled linear motors.

EP 2 081 982 B1

**14.** A method according to claim 13, **characterized in that** the clips are interconnected by means of a scissor-type joint and the clips are spaced by moving the scissor-type joint apart.

**Revendications**

**1.** Feuille biaxialement orientée, constituée d'au moins une couche contenant un polymère I réalisé à partir d'au moins un acide carboxylique hydroxylé, **caractérisée en ce que** la feuille présente une épaisseur < 25 μm et est étirée simultanément, et

présente une résistance à la rupture comprise entre 140 et 250 N/mm$^2$ dans la direction MD et comprise entre 140 et 250 N/mm$^2$ dans la direction TD ou
un module d'élasticité compris entre 3200 et 6000 N/mm$^2$ dans la direction MD et compris entre 3200 et 6000 N/mm$^2$ dans la direction TD,

la différence entre valeurs de la résistance à la rupture ou les valeurs du module d'élasticité dans la direction MD et dans la direction TD étant inférieure ou égale à 40 %, par rapport à la valeur dans la direction TD.

**2.** Feuille selon la revendication 1, **caractérisée en ce que** le polymère I, réalisé à partir d'unités d'acide carboxylique hydroxylé aliphatiques, de préférence à partir d'unités d'acide lactique, présente un point de fusion compris entre 110 et 170 °C et un indice de fluidité compris entre 1 et 50 g/10 min.

**3.** Feuille selon l'une des revendications 1 à 2, **caractérisée en ce que** la couche en PHC constitue la couche de base de la feuille, ladite couche de base étant en outre pourvue, sur l'une de ses faces ou sur ses deux faces, de couche(s) de couverture constituée(s) d'au moins un polymère I réalisé à partir d'au moins un acide carboxylique hydroxylé.

**4.** Feuille selon l'une ou plusieurs des revendications 1 à 3, **caractérisée en ce que** ladite feuille présente une densité inférieure à 1,25 g/cm$^3$, de préférence comprise entre 0,6 et 1 g/cm$^3$.

**5.** Feuille selon l'une ou plusieurs des revendications 1 à 4, **caractérisée en ce que**, sur au moins une surface, ladite feuille est métallisée.

**6.** Utilisation d'une feuille selon l'une des revendications 1 à 5 en tant que feuille d'emballage, en tant que feuille de papillotage ou en tant que feuille d'étiquette.

**7.** Procédé de fabrication d'une feuille en PHC selon l'une des revendications 1 à 6, s'agissant préférentiellement d'une feuille en PLA, **caractérisé en ce que** l'on extrude une matière en fusion constituée de PHC, préférentiellement de PLA, et le cas échéant d'autres additifs et l'on refroidit la matière en fusion pour obtenir une pré-feuille, la pré-feuille refroidie étant ensuite étirée simultanément dans les directions longitudinale et transversale, **caractérisé en ce que** le taux d'étirage est supérieur ou égal à 4 dans la direction longitudinale.

**8.** Procédé selon la revendication 7, **caractérisé en ce que** le taux d'étirage dans la direction transversale est compris entre au moins 3 et 7.

**9.** Procédé selon la revendication 8, **caractérisé en ce que** ladite feuille est réalisée avec un taux d'étirage compris entre 4 et 6 dans la direction longitudinale et avec un taux d'étirage compris entre 4 et 6 dans la direction transversale.

**10.** Procédé selon la revendication 7, **caractérisé en ce que** le rapport des surfaces après et avant l'étirage est d'au moins 21.

**11.** Procédé selon la revendication 10, **caractérisé en ce que** ladite feuille est étirée avec un taux d'étirage compris entre 3 et 6 dans la direction longitudinale et avec un taux d'étirage compris entre 3,5 et 7 dans la direction transversale.

**12.** Procédé selon l'une des revendications 7 à 11, **caractérisé en ce que** la matière en fusion est extrudée à travers une filière plate et l'étirage simultané est réalisé au moyen de pinces lesquelles sont montées mobiles sur des rails de guidage divergents et lesquelles subissent, durant l'étirage dans la direction de déplacement de la feuille, une accélération telle que la distance entre les pinces augmente, la feuille subissant ainsi simultanément à l'étirage longitudinal un étirage dans la direction transversale.

13. Procédé selon la revendication 12, **caractérisé en ce que** l'accélération des pinces est réalisée sur commande au moyen de moteurs linéaires.

14. Procédé selon la revendication 13, **caractérisé en ce que** les pinces sont reliées entre elles au moyen d'une articulation de type ciseaux et leur distance est définie en écartant l'articulation de type ciseaux.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5443780 A
- EP 1153743 A
- EP 0748273 A
- US 2004010063 A1
- EP 1245616 A
- EP 0980894 A
- JP 2003136592 A
- US 5208297 A
- US 5247058 A
- US 5357035 A
- EP 1068949 A
- EP 1112167 A
- EP 0785858 A
- US 20060115548 A